# EUROPEAN PATENT APPLICATION

(11) **EP 1 640 208 A1**
(43) Date of publication of application: **29.03.2006**
(21) Application number: 04735746.2
(22) Date of filing: 02.06.2004
(51) Int. Cl.: B60P 1/43, A61G 3/06

(54) **CONSTRUCTION IMPROVEMENTS TO BE IMPLEMENTED DURING THE CUSTOMISATION, TRANSFORMATION OR CONVERSION OF VEHICLES, IN ORDER TO PROVIDE ACCESS FOR AND TO ENABLE THE TRANSPORT OF DISABLED AND/OR WHEELCHAIR-BOUND PERSONS**

(30) Priority: 04.06.2003 ES 200301328
(71) Applicant: CARADAP, S.L., E-08004 Barcelona (ES)
(72) Inventor: GARCIA NAVARRO, Sebastián, E-08004 Barcelona (ES)
(74) Representative: Sajda, Wolf E.
(86) International application number: PCT/ES2004/000250
(87) International publication number: WO 2004/108475

(57) **Abstract**

These improvements basically consist in a single-frame chassis device located under the original single-frame type vehicle chassis, a dismountable side double leaf ramp, a modification of the axle or suspension bridge, a system to compress the vehicle suspension and a rotating step. The improvements are applicable to the changes, transformations or conversions to be carried out on single-frame type vehicles and on those where it is intended to gain inside height and/or to decrease the vehicle floor level to ground level to facilitate access to disabled persons who cannot walk or who are provided with wheelchairs, whether said access is by ramp or step (figure 2).

## Description

### PURPOSE

The purpose of this request for invention patent is the improvements in making changes, transformations or conversions to vehicles for access and transportation of disabled persons and/or wheelchairs.

### FIELD OF THE INVENTION

This invention patent is generally related to the field of vehicle access systems and, specifically, to the improvements in making transformations, changes or conversions to vehicles for access and transportation of disabled persons provided with wheelchairs, which provide the function to which they are intended with various advantages to be detailed later on, apart from others inherent to their organization and constitution.

### HISTORY

In the present state-of-the-art changes, transformations or conversions carried out on monovolume vehicles are known, consisting in including a structural part usually lower than the original chassis to the vehicle together with a ramp between the new level of the floor and ground level, which is conceived to facilitate access to said vehicle, the location and transportation in same of disables persons usually provided with a wheelchair.

This type of change, transformation or conversion constituting the present state-of-the art basically consists of cutting an area of the vehicle's original chassis and building a structure in the shape of a box mounted under the former, with an entrance to the new level near one or various entrance doors, either through the back or side of the vehicle. The mentioned structure normally includes a ramp that folds vertically or can be hidden under the lower floor and is manually or automatically unfolded or extracted, resulting in disadvantages such as reducing free space or interior height inside the vehicle, mechanical or production complexity. When installing and building the new structure in transformations next to suspension systems its maneuverability is limited. With the present state-of-the-art the modifications of axles or suspension bridges are also known, with the inconvenience of being made with materials that differ from the vehicle's original materials in their central zone resulting in a difference in the behavior of this system as regards the original. Also present in the actual state-of-the-art are systems to compress the suspension or lower the height of the vehicle as regards the ground level. The present systems normally use hydraulic, electric cylinders or pneumatic systems for this purpose. These systems operate on the original suspension systems so as to generate a lever force sufficient to compress and have the inconvenience of duplicating elements such as shock absorber and hydraulic cylinder, or of changing the original absorber effect of the vehicle. Other systems aiding access to vehicles with the present state-of-the-art are those arranged step-wise to reduce the entrance height of the vehicles at intervals. These systems are normally of the telescopic type, able to be stored or with parallel arms, which have the inconvenience of requiring to much space under the vehicle. This is the main problem as regards installing them in vehicles with changes, transformation or conversion where the main purpose is to attain maximum space and free height lowering the floor level.

### SUMMARY OF THE INVENTION

The purpose of the invention makes reference to improvements applicable to the changes, transformations or conversion to vehicles of the above mentioned type, which have been obtained and are the result of the experience of the applicant of this invention patent in this industrial field, the main purpose of which is to eliminate the disadvantages briefly explained above, common to the present state-of-the-art.

The main purpose of the invention consists in including means that improve the safety, facilitate manufacturing and authorize access of disabled persons to monovolume-type vehicles, whether provided with wheelchairs or not. Amongst the means explained, the single frame structure improves the passive safety of the vehicle, houses the different active safety components as regards the wheelchair and its occupant, apart from all the attaching system of the removable double-leaf ramp components. The removable double-leaf ramp improves habitability, passive safety, ease of handling, removal of the system, repair, maintenance and cleaning, production and erection on being a completely independent system, agility and simplicity and, therefore, it also eliminates the obstacle of having the ramp in a vertical position just behind the wheelchair or of increasing the free height between the floor and roof of the vehicle as a result of not having to house the hidden ramp system under the floor. The result, therefore, consists in a ramp divided into two leaves, housed vertically on the sides of the wheelchair and its occupant. The modification of the axle or suspension bridge helps to conserve the mechanical characteristics and movement geometries of the original suspension system, apart from improving its ease of construction and production due to the simplicity of the parts used. The suspension compression system improves as regards conserving the vehicle shock-absorber system with the same characteristics and simplifies the components to be installed as it unites the two functions (shock absorbing and compression) in one same device, such as the cylinder shock absorber. It also facilitates unblocking as the system stops operating if the electric supply is cut off. The rotating step improves in mechanical and electrical simplicity and also in size, once it is in its folded position, and in the possibility of being shaped for different vehicles and different placing positions.

To complement the description herein and in order to help with a better understanding of its characteristics, attached to this descriptive report is a set of drawings in which the most significant details of the invention are represented in an illustrative but not limiting way.

### BRIEF DESCRIPTION OF THE DRAWINGS

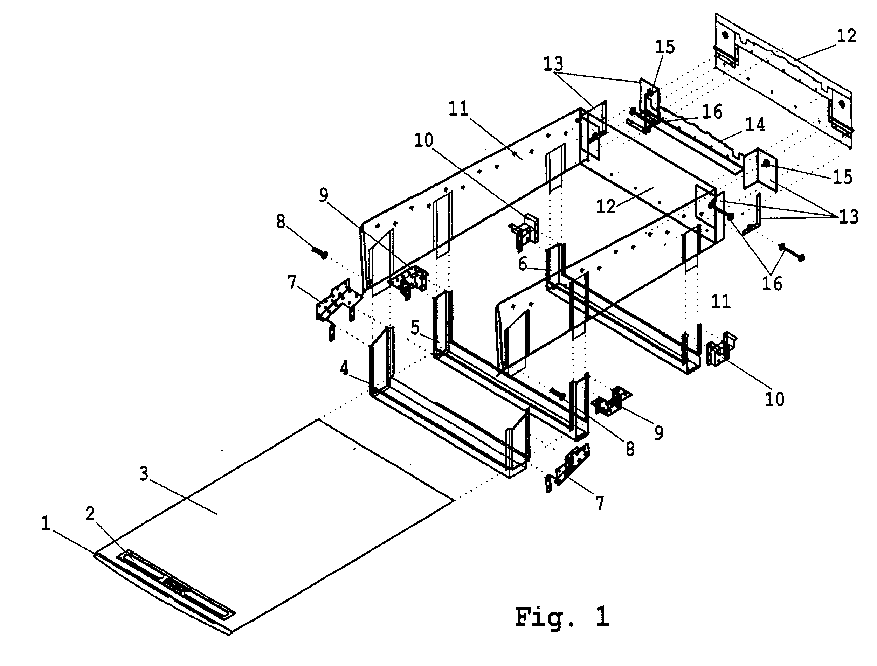

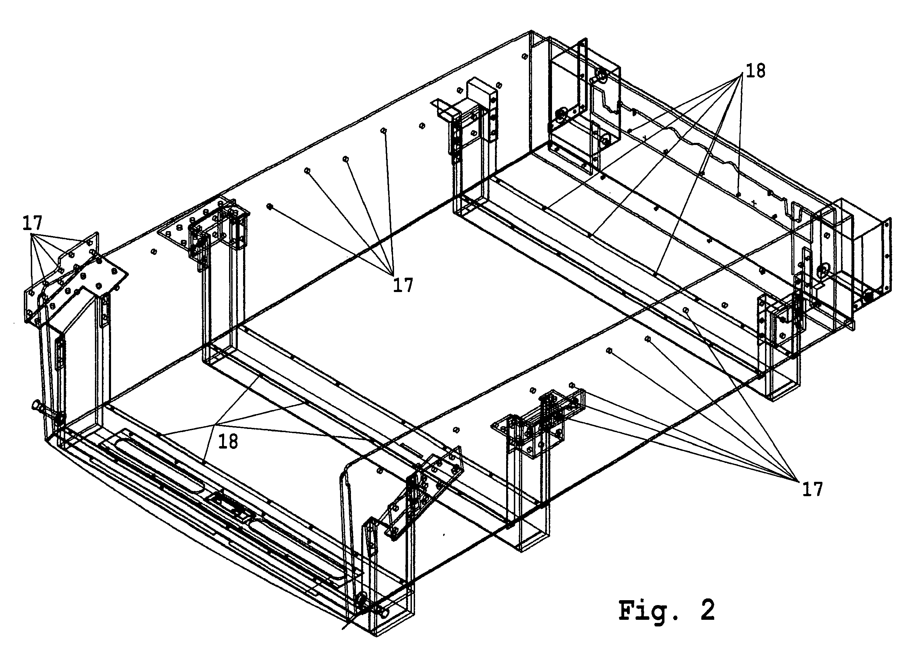

Figures 1 and 2 show the single-frame chassis. Figure 1 indicates the dismantled single-frame chassis. Figure 2 indicated the complete single-frame chassis.

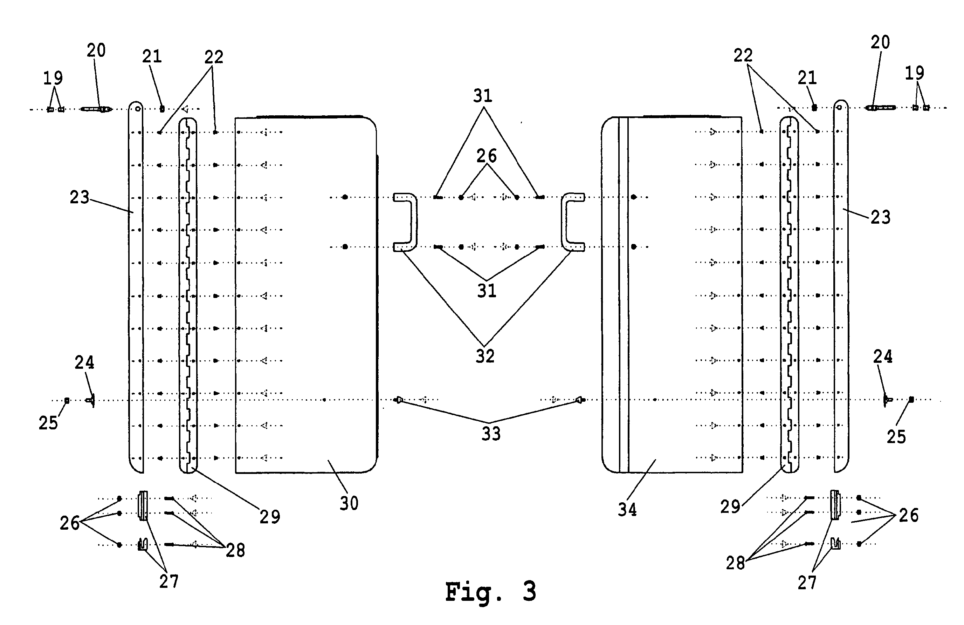

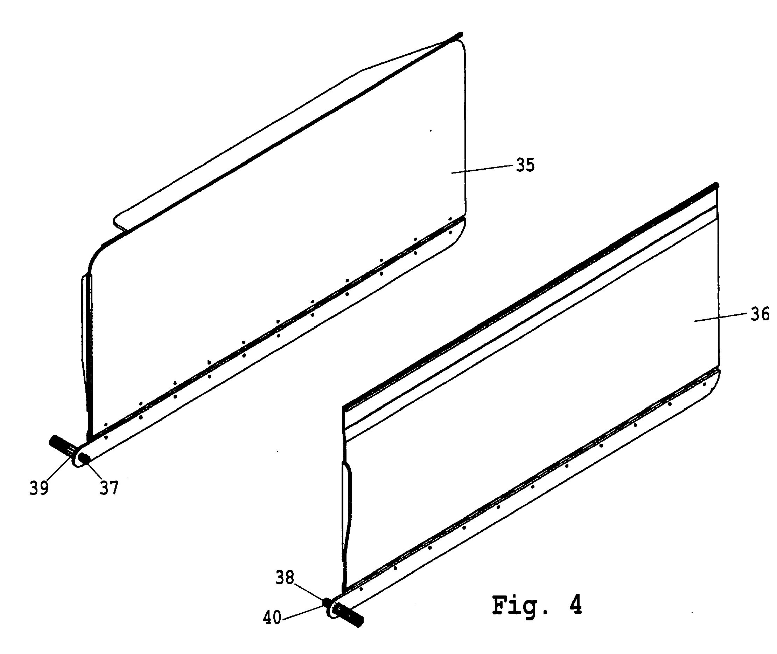

Figures 3 and 4 show the dismountable side double leaf ramp. Figure 3 indicates the dismantled side double leaf ramp. Figure 4 indicates the folded side double leaf ramp.

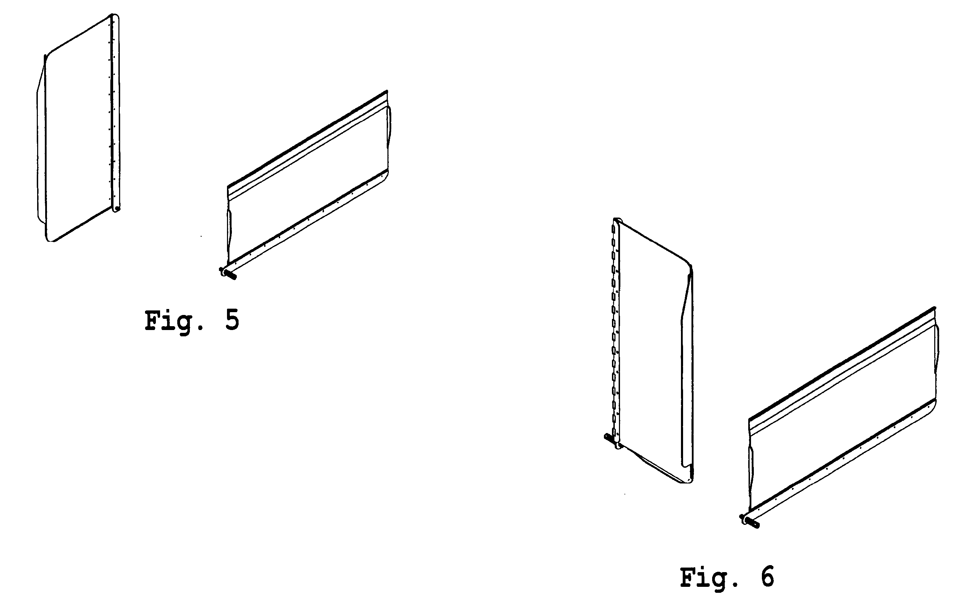

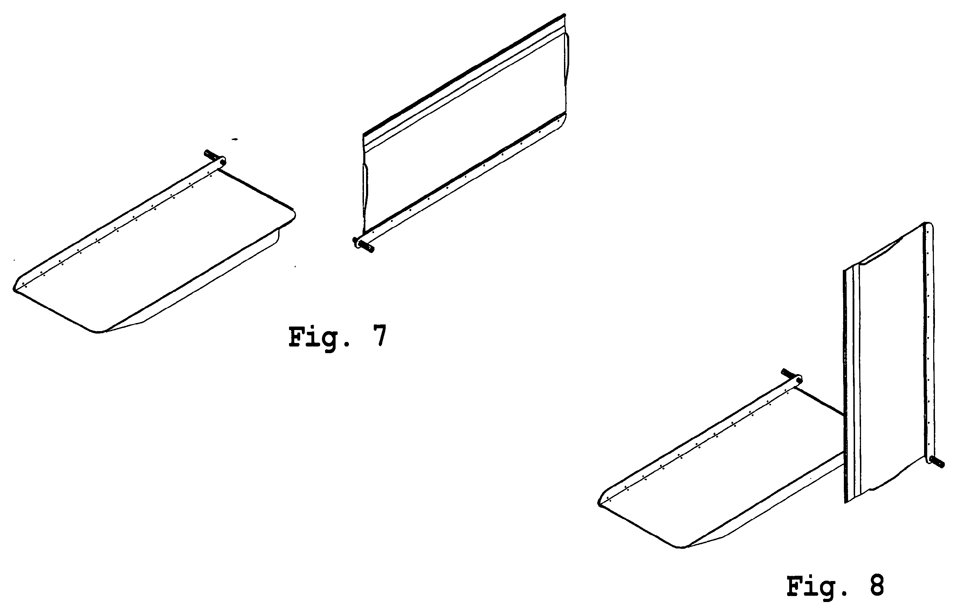

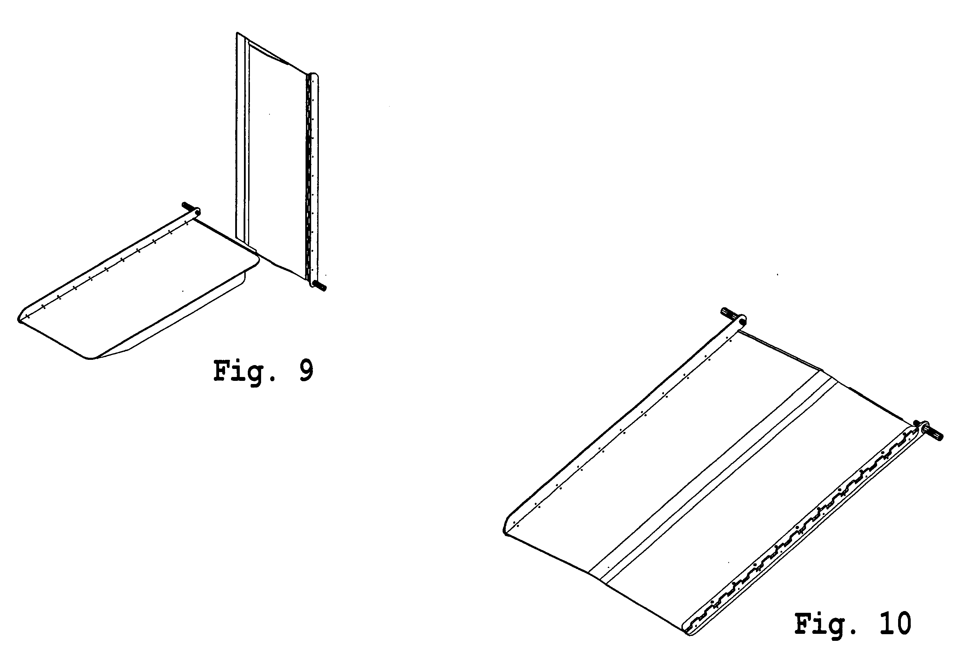

Figures 5 to 10 show the movements of the side double leaf ramp. Figure 5 indicates raising of the left ramp. Figure 6 indicates turning the left ramp. Figure 7 indicates laying the left ramp. Figure 8 indicates raising the right ramp. Figure 9 indicates turning the right ramp. Figure 10 indicates laying the right ramp.

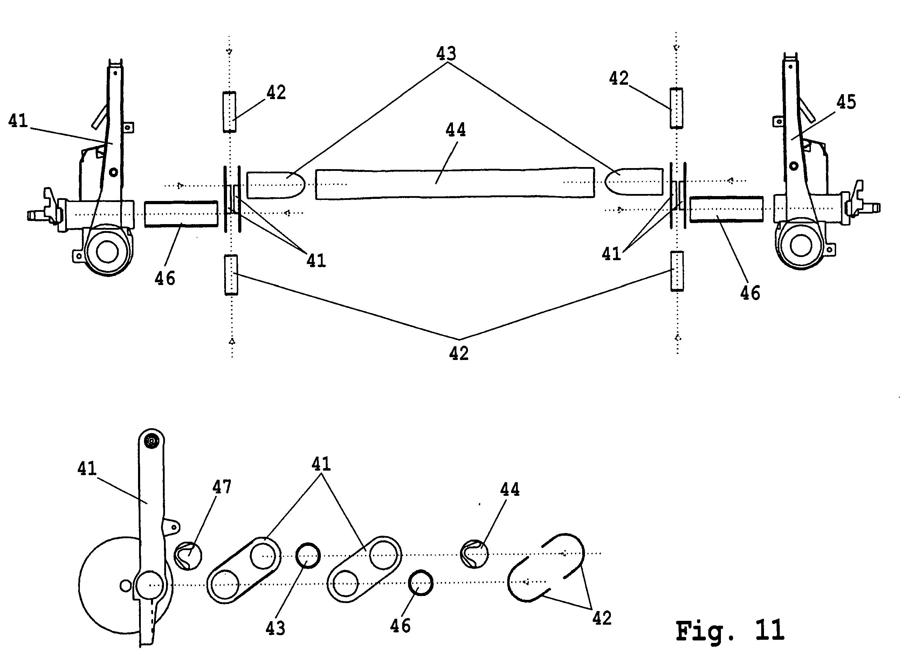

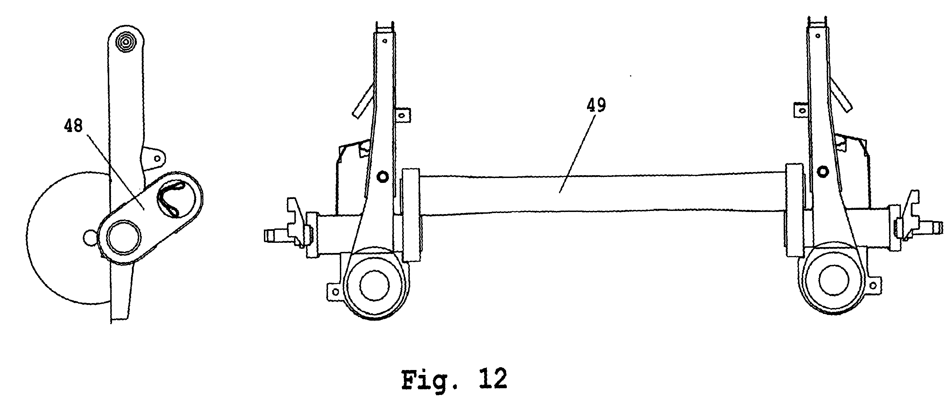

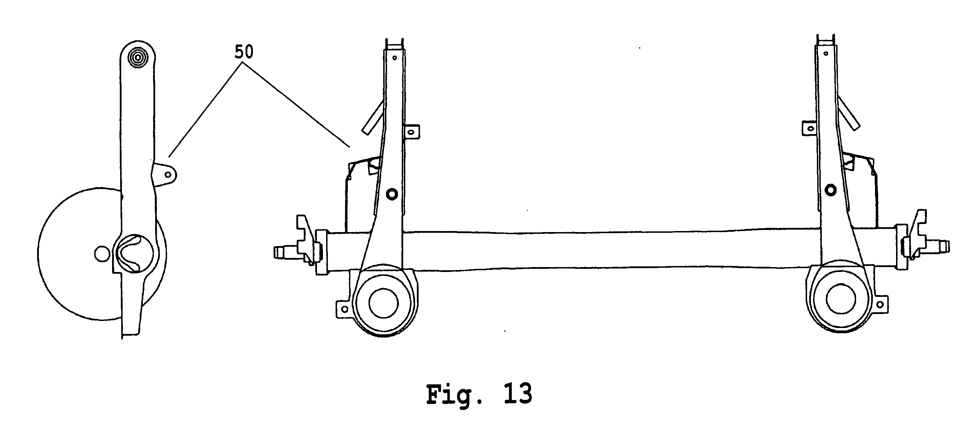

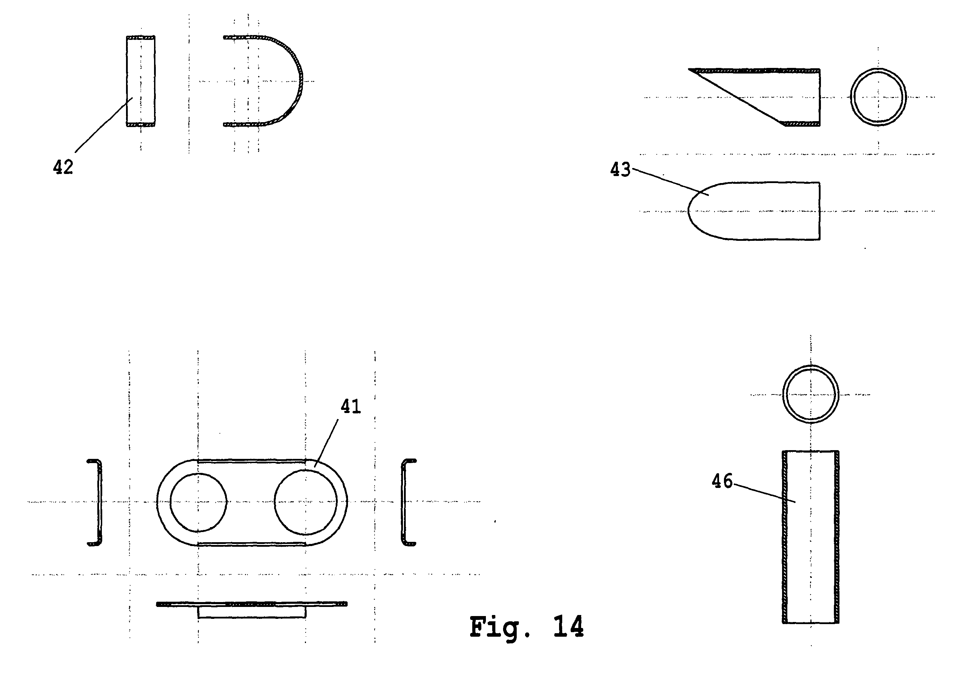

Figures 11 to 14 show modification of the axle or suspension bridge. Figure 11 indicates the dismantled axle or suspension bridge. Figure 12 indicates the assembled axle or suspension bridge with the modification. Figure 13 indicates the original axle or suspension bridge without the modification. Figure 14 indicates the new dismantled part to modify the axle or suspension bridge.

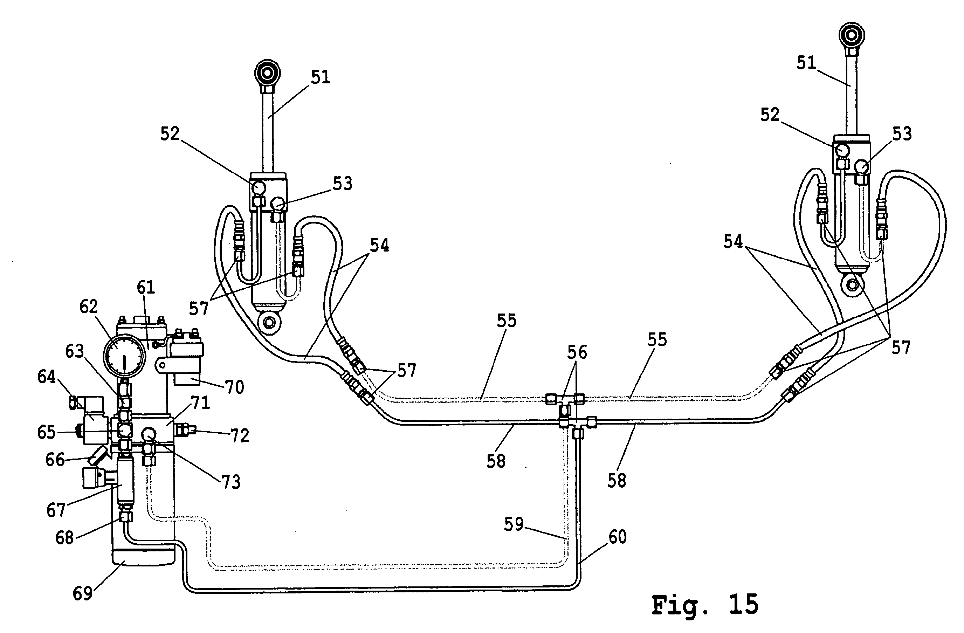

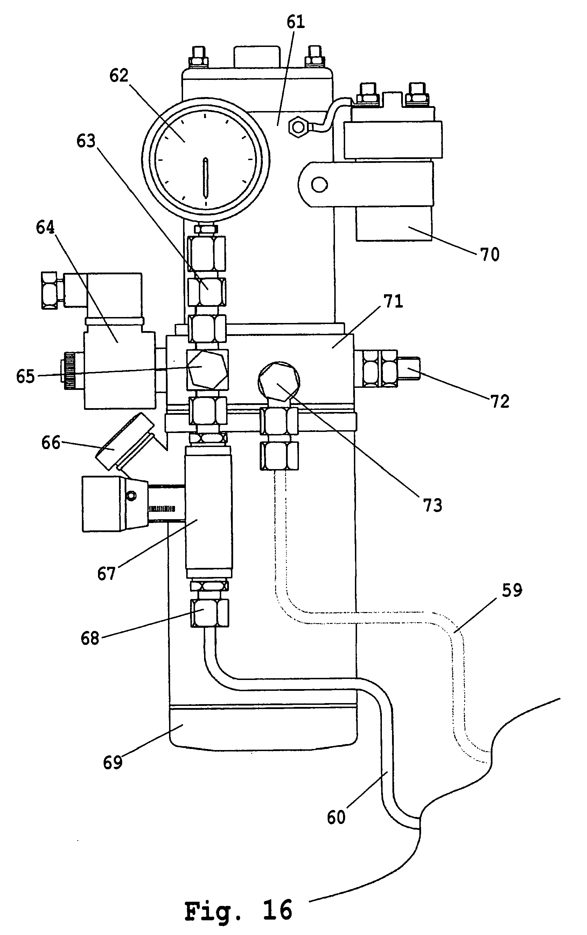

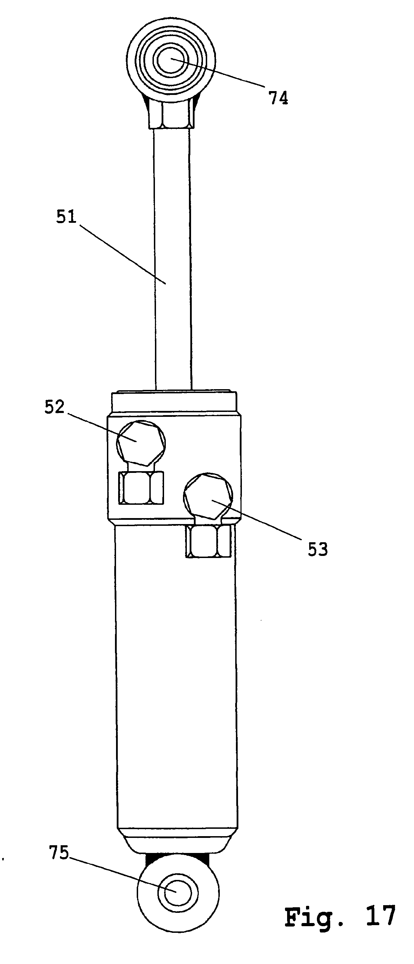

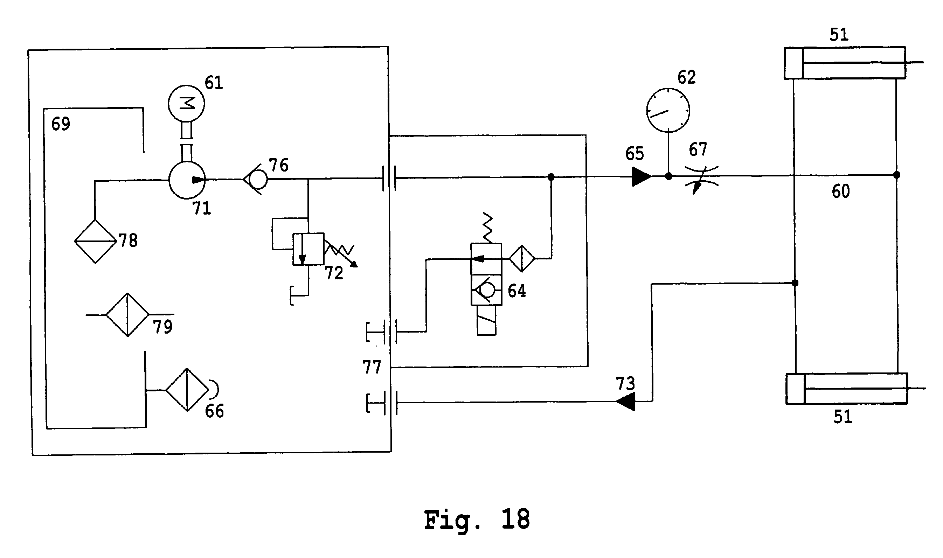

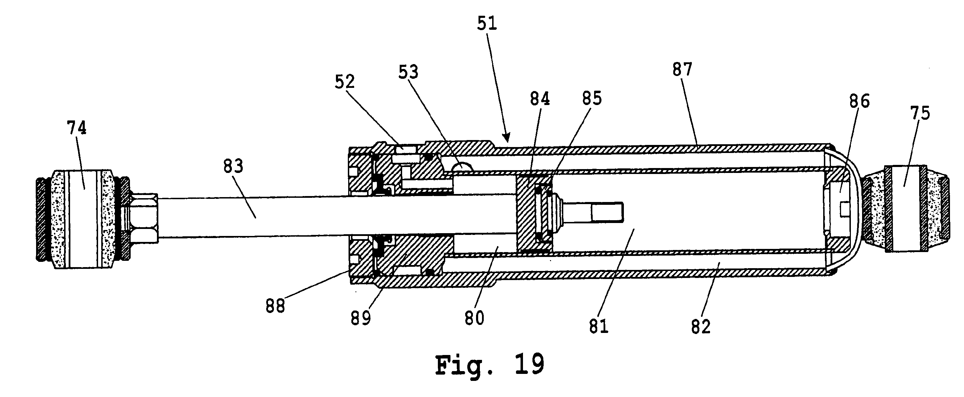

Figures 15 to 19 show the vehicle suspension compression system. Figure 15 indicate a hydraulic pump and some components. Figure 17 indicates a double-effect shock absorber. Figure 18 indicates a hydraulic sketch to compress the vehicle suspension. Figure 19 indicates the absorbing cylinder to compress vehicle suspension.

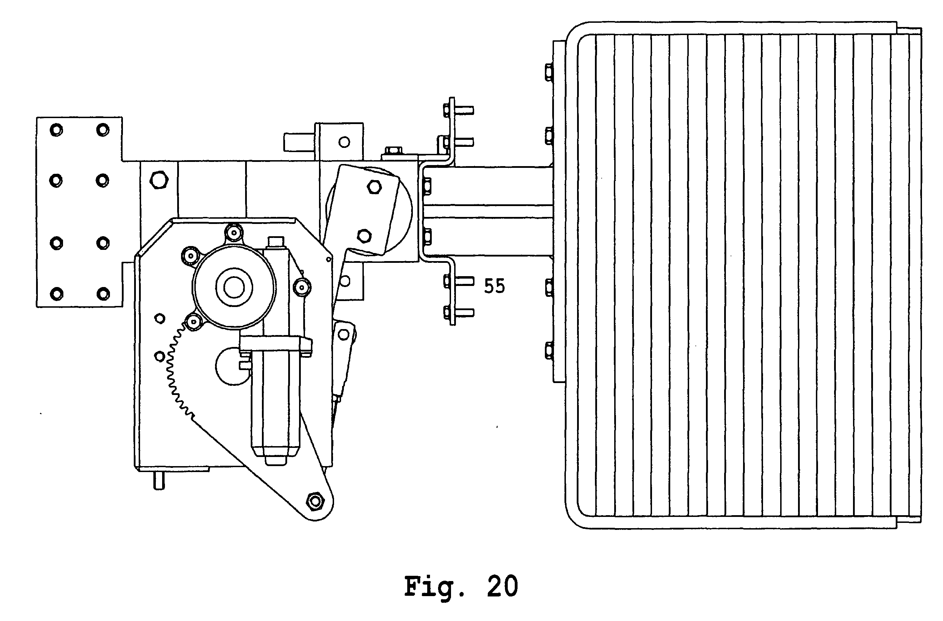

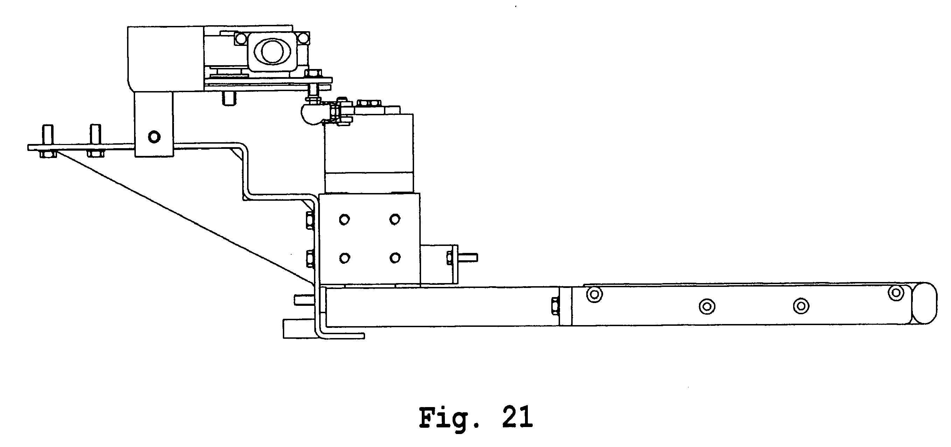

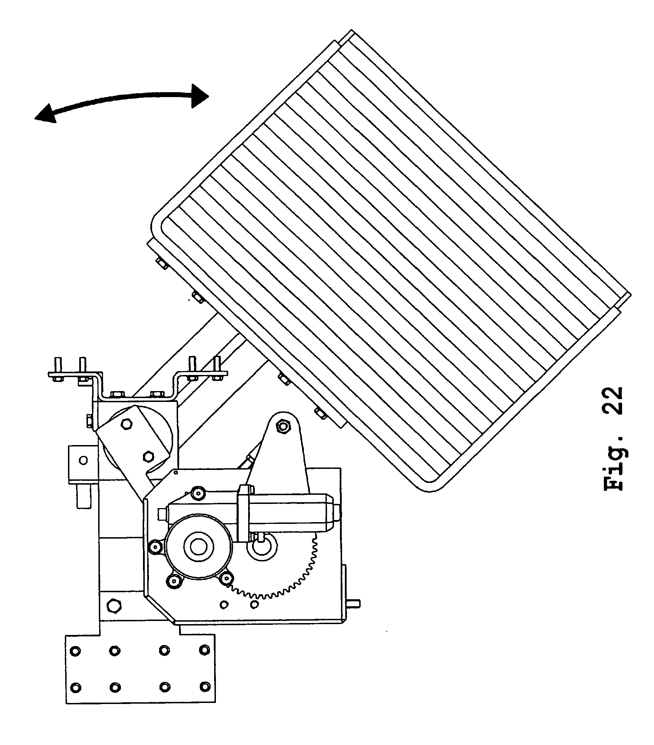

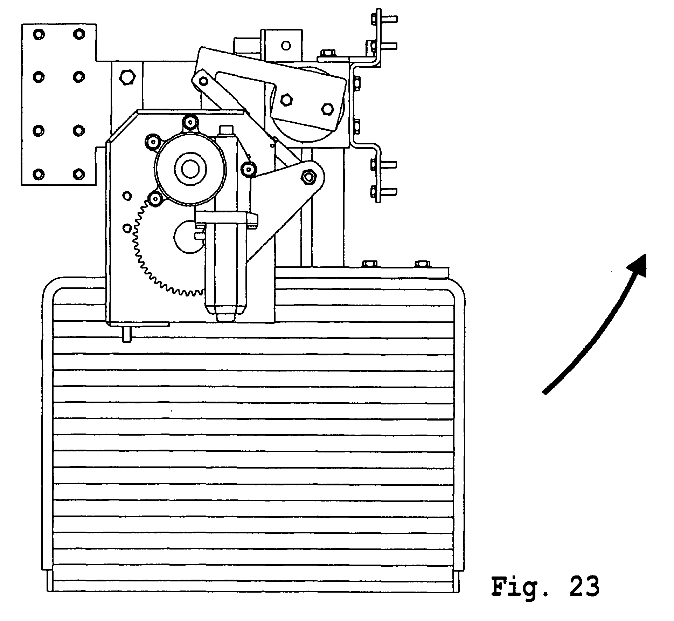

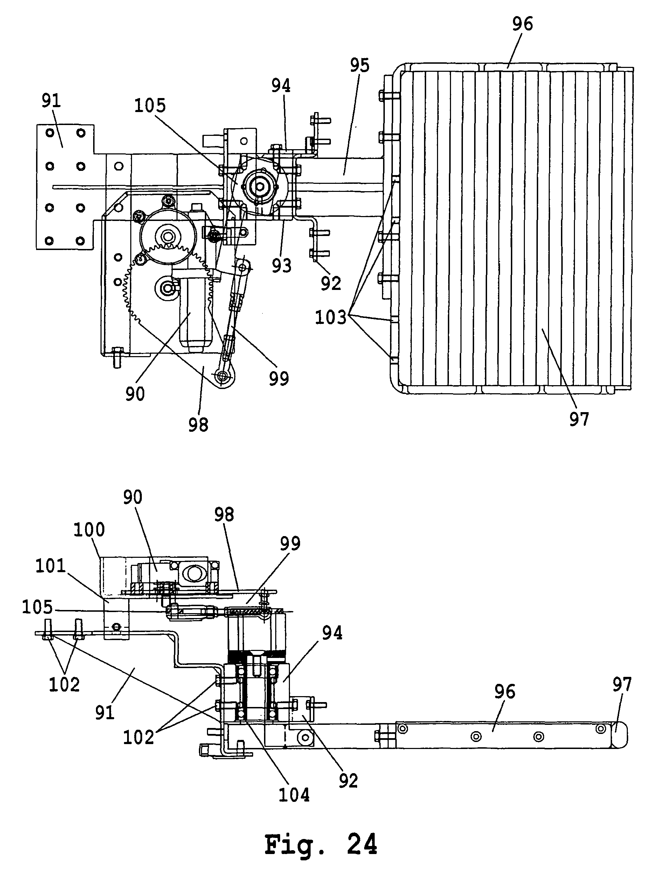

Figures 20 to 24 show the rotating step. Figure 20 indicates a floor view of the rotating step ready to be used. Figure 21 indicates a side view of the rotating step. Figure 22 indicates the rotating step in operation. Figure 23 indicates the rotating step when stored. Figure 24 indicates the rotating step dismantled.

### DESCRIPTION OF A PREFERRED PERFORMANCE OF THE INVENTION

In order to foster and understand the principles of the invention, reference will now be made to the designs showed in the drawings and specific terms will be used to describe them. However, it must be understood that it is not intended to establish limits as regards the scope of the invention by these means. All changes or modifications toto the illustrated devices or other applications of the principles of the invention described in this document that could occur to a person qualified in the field of the invention are included within the scope of said invention.

With reference to figures 1 and 2, a single-frame chassis type system is shown in accordance with this invention. The single-frame chassis system includes a floor 3, sides 11 and a back panel 12, joined together by its side ends as a box open at one end and the upper part. The crosspieces 4, 5 and 6 have an Omega structural shape and their constructive U-shape permits them to reinforce the lower part of the floor 3 and the sides 11. The reinforcement triangles 7. 9 and 10 are predestined in shape, size and specific dimensions for the types of vehicles on which the changes, transformations or conversions are carried out. The union points 18 are an example of those that permit shaping the part as a single-frame chassis. The points 17 are an example of those that permit attaching the single-frame chassis to the vehicle and present on the sides 11, back panel 12 and triangles 7, 9 and 10. Parts 13 and 15 next to the bolts and pins 16 form boxes behind the back panel 12 where the retaining and safety systems of the wheelchairs and their occupants are located. The closing outline 14 is next to the back panel and closes the chassis in the shape and size of the vehicle. The back location is intended for placing the retaining and safety systems of the wheelchairs and their occupants. The main characteristic of this single-frame chassis is that it also has union points and pivot 8 of the dismountable side double leaf ramp, apart from its anchorage parts 1 when being used. The back part of the ramps is inserted in these anchorage parts preventing their movement whilst being used. The single-frame chassis can be mounted on a vehicle under the back floor, under the structure, under the side floor or in any other position that may occur to those qualified in the sector. The shapes, sizes and dimensions may vary depending on the vehicle in which they are installed and the situation that may occur to those qualified in the sector.

With reference to figures 3 to 10, a dismountable and side double leaf ramp-type system is shown in accordance with this invention. The ramp system includes a left side ramp 35 and a right side ramp 36, which both have lineal loose rotating axles 39 and 40 and also respective loose rotating removal pivots 37 and 38. The lineal rotating axles or side 29 and transversal 20 hinges or pins are in turn joined to the sides 23 by bolts 21 and 22. The caps 19 are mounted on the specific housings 8 of the single-frame chassis and serve to soften and avoid the transversal rotation from seizing. Even though the rotation axles are illustrated and described in this document in reference to the hinges 29 and pins 20, it must be understood that the principles of this invention can also be applied to other rotating component types, such as elastic sheets and screwed bolts or multiple hinges. The ramp system includes attachments 27 and attachment butts 33 and 34, strategically placed so that when the ramps are in the folded position these are tight and inserted thus preventing involuntary movement. The butts 33 and 24 and the attachment 27 are mounted with bolts and attachments 25, 26 and 28. The ramp system is also complemented by handles 32 that facilitate handling and are placed on their two respective sheets 30 and 34 with bolts and attachments 13 and 26. The movement of the ramps is described as follows and in the illustration it is seen as manual operation, although the possibility of making it automatic by automatic systems or assistance when handling by mechanical systems that could occur to someone qualified in the sector has not been discarded. Starting from the folded or resting position in figure 4, the following figure 5 shows the first movement of the left ramp when being raised to its vertical position, next rotating it on its lineal axle approximately ¼ turn as shown in figure 6 to finish lying on the interior and exterior floor according to figure 7, inserting the short side nearest the single-frame chassis in the assigned anchorage 1. The movement of the right ramp is carried out in the same way, raising the ramp to its vertical position according to figure 8, rotating it as in figure 9 and laying and inserting it as in figure 10. The folding movement is made by reversing all the described movements.

With reference to figures 11 to 14, a suspension bridge or axle modification type system is shown in accordance with this invention. The modification generally consists in moving the central part 44 of the original bridge or axle as regards their sides 41 and 45, changing their initial geometry and permitting more space for positioning the single-frame chassis within the vehicle as a whole with change, transformation or conversion. The new position of the central section 47 has a movement in two X and Y coordinated axes, depending on the necessities of the vehicle for which it is intended. The movement is obtained inserting ends 41 placed the other way round, as the internal drills are of a different diameter, reinforcing the joint between axle or bridge and ends with the tubes 46 on the suspension arm 41 and 45 side and the tubes 43 on the central tube 44 side. For greater safety the movement is closed with the lids 42 both on the upper and lower parts. The movement dismantled set 48 obtains the new geometry of the suspension bridge or axle 49 unlike the original 50.

With reference to figures 15 to 19, a vehicle suspension compression type system is shown in accordance with this invention. The suspension compression system basically includes a set or hydraulic block, a hydraulic installation and hydraulic cylinder absorbers, all controlled by an electric system. The set or hydraulic block is formed by an electric part and a hydraulic part. The electric part consists of a main motor 61, a control relay 70 and a shutoff electrovalve 64. The hydraulic part consists of a pump body 71, a safety and pressure limit valve 72, a hydraulic fluid tank 69 with its respective ventilation lid 66, a flow restrictor 67, an operating pressure indicating clock 62, a hydraulic fluid pressure outlet 65, a tank pressure connection 73 and coupling nuts such as 63 or 68. The hydraulic installation consists basically of a main operating pressure line 60 and a tank ventilation line 59. Both branch of in two side lines: the operating pressure line in two 58 that connect with flexible straps 54 by nuts 57 and which, in turn, connect by their end to the upper entrance 52 of the cylinder absorber 51, whilst the tank ventilation line branches off in two 55 that connect with flexible straps 54 by nuts 57 and which, in turn, connect by their end to the lower entrance 53 of the cylinder absorber 51. The hydraulic cylinder absorbers 51 consists of a rod side erection point 74, a body side erection point 75, a rod 83 joined by one of its ends to the rode side erection point 74 and by the other to the seal bobbin 85, a main exterior sleeve 87 joined by one of its ends to the body side erection point 75 and by the other watertight with the seal lid 88. It also has the upper entrance end orifices 52 and lower entrance end 53, a body and internal sleeve 89, an exterior seal lid 88, a floating piston 84 and an inline valve 86. All these components form three internal chambers, which are: working chamber 80, internal chamber 81 and external chamber 82. The working chamber is joined to the upper entrance 52 by an orifice in the internal body 89, the internal chamber 81 connects to the external chamber 82 by the inline valve 86 and the external chamber connects to the lower entrance 53. Also to be found inside the pump body is the non-return valve 76, the suction filter 78, the return filter 79, the various return orifices 77 and the hydraulic part of the electro-valve 64.

The purpose of the vehicle suspension compression system in accordance with this invention is to decrease the height of the vehicle floor level as regards ground level and thus obtain, at the same time, a decrease in the slant angle of the access ramp when this is being used. This effect is obtained by replacing the original shock absorbers of the vehicle for the cylinder absorbers 51. The original absorbing effect of the vehicle is obtained by maintaining the cylinder absorbers 51 in the following way: When in the resting position all the chambers 80, 81 and 82, are full of hydraulic fluid. When the vehicle is moving, its suspension system is moving and also causes the movement of the rod 83 and the seal bobbin 85, which are integral, and not the piston 84, which is independent. These, in turn, increase or decrease the volume of the chambers 80 and 81 with consequent entrance or exit of hydraulic fluid. The chambers 80 and 82, in turn, are connected to the tank in this situation. Entrance and exit of hydraulic fluid is made through the valve 86, which has its flow restricted and gauged according to the characteristics of the vehicle, causing absorption at the rate of speed that directly affects the rod 83. Movement of the piston 84 in this situation is only indirect and when the rod moves outwards. The chamber 80 also has the flow restricted to the hydraulic fluid tank through the flow regulator 67, which is adjusted according to the vehicle necessities. When it desired to compress the vehicle suspension the following is performed: The electro-valve 64 is excited and left supplied through the electric system (this electro-valve is open when resting and closed in one direction and open in the other when it is excited, as can be seen in the sketch of figure 18) at the same time as the relay 70 is put into operation that operates the motor 61, whilst in turn the motor moves the pump 71 and this sends pressure hydraulic fluid to the chamber 80 of the cylinder absorbers 51 through the pressure hydraulic fluid outlet 65, the flow restrictor 67 and the main operating pressure line 60. The pressure hydraulic fluid pushes the piston 84 until it touches the seal bobbin 85 and then the rod 83 is moved, contracting the cylinder absorber and, in turn, the suspension of the vehicle. In these circumstances it is the safety and pressure control valve 72 the opens the hydraulic fluid flow to the tank when a pressure value higher than the gauge pressure is reached. Once the suspension is lowered and in order to leave it in this position, the electric system stops supplying the relay 70 and thus the motor 61, but maintains supply of the electro-valve 64 and this the pressure in the chamber. Access of the hydraulic fluid to the pump 71 is closed by non-return valve 76, whilst the pressure is indicated on the operating pressure indicator clock 61. To raise the suspension of the vehicle the electric system simply stops supplying the electro-valve 61 and allows the hydraulic fluid to return to the tank through the flow regulator 67, which will dampen the extension of the rod being stretched by the springs of the vehicle suspension.

With reference to figures 20 to 24, a rotating step type system in illustrated in accordance with this invention. The rotating step system includes a tread 97 joined to a structure 96 in turn joined to an axis arm 95 that rotates inside a main support 93 thanks to bearings 104. The main support is attached to the vehicle by supports 92 and 91 with the bolts 102. The axis arm is also integral with cam 105 through its upper part, which receives the ball-and-socket joint arm 99 through one of its ends, whilst it pivots at the other end on the cogs 98, which move the motor 90 located in the motor box 100 and attached to the system by the support 101. The system is complemented by two final limit mechanical butts, one on the outside 94 and the other forming part of the support 91 itself. The movement is as follows: an electric installation supplies the motor 90 rotating in one direction and this, in turn, rotates the cogs 98, which cause movement of the cam 105 through the pivot of the ball-and-socket joint arm 99. As this is joined to the axis arm 95 it rotates it until finding one of its mechanical butts 92 or 91. If the electric installation inverts the motor movement the movement of the set will also be inverted. The position of the parts and the movement can be seen in figures 20, 21, 22 and 23. The system also includes the possibility of dismantling the ball-and-socket joint arm 99 and thus store the step manually, blocking it in the stored position with the same dismantled part of the ball-and-socket joint arm 99 and placed on the support 91, as can be seen in figure 24. Operation of the installation is made by an electronic control, although it can also be performed by limit switches or sensor control in movement if occurred by those qualified in the sector. The design of the figures corresponds to a rotating step to be placed under the right side door of a vehicle, although the possible placing in any access position of the vehicle has not been discarded and, therefore, the set has drills and machining for this purpose, such as the screwed drills 103 intended to make the system reversible with left and right rotation, if occurred by those qualified in the sector. The shapes and sizes of all the parts can vary based on the necessities of each vehicle in which the system can be installed. Movement of the electric motor can also be replaced by a mechanical, hydraulic, gas, etc. spring system in order to be able to perform the rotating operation manually or mechanically, if occurred by those qualified in the sector.

## Claims

1. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, **characterized by** the fact it includes a single-frame chassis under the original chassis and anchored by attachments 17 in a back or side position as regards one or various entrance or access doors of said vehicle. A side double leaf ramp has been provided inside said chassis that pivots on the joining points and pivot 8 with each of its leaves in a vertical position on the sides of the ramp, inside and parallel to its sides 11.

2. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, **characterized by** the fact it includes a removable side double leaf ramp, which is movable and joined to two rotating axes on each of its sides. The lineal axis 40 and the transversal 38 are on the right side and the lineal axis 40 and the transversal 37 are on the left side, permitting outward movement of the ramps on the union points and pivot 8 of the single-frame chassis in order to place its back part at ground level and its front part inserted in the anchoring parts 1 at floor level of the mentioned chassis.

3. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, **characterized by** the fact it includes a modification of the axle or suspension bridge by varying the position of its central part 44 as regards that of the sides 41 and 45 to a new position 47 moved according to X and Y coordinate axes in order to avoid geometric interference with the single-frame chassis. The movement is made by inversely inserting the ends, reinforcing their attachment with tubes 46 and 43 on the inside and with half moons 42 on the outside.

4. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, **characterized by** the fact it includes a suspension compression system basically consisting of a set of hydraulic bloc, a hydraulic installation, hydraulic cylinder absorbers and an electric installation that controls the functions of the hydraulic block, which controls the flow and pressure of the cylinder absorbers 51, performing the absorber functions during normal operation of the vehicle when so required.

5. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, **characterized by** the fact it includes a rotating step system the basic operation of which is to rotate the axle arm 95 joined to the tread 97 approximately ¼ of a turn. This movement is made by the motor 90 on the cogs, which in turn and through the ball-and-socket joint arm 99, pushes the cam 105 joined to the axle arm 95 and tread 97.

6. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, according to claim 2, **characterized by** the fact some housings in the form of anchorages 1 are found on the interior floor 3 of said chassis, arranged transversally and near the outside edge of the floor 3 itself and are suitable to receive the housings on the front part of the ramps 35 and 36.

7. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, according to claim 2, **characterized by** the fact the sides 23 have removal pins 20 on one their ends permitting rapid dismantling of the ramps 35 and 36 from the union points and pivot 8 on the single-frame chassis.

8. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, according to claim 2, **characterized by** the fact the ramps 35 and 36 are secured on the single-frame chassis by attachments 27 and the butts 24 mounted on said frame, as well as by the elastic butts 33 installed on the ramp leaves 30 and 34.

9. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, according to claim 2, **characterized by** the fact the sides 23 of the ramps 35 and 36 form upward vertical side reinforcements, with one of the ramps having the opposite side in a straight angle forming a downward vertical reinforcement whilst the other ramp has the opposite side in a Z-shape in order to overlap on the first ramp when said ramps are being used.

10. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, according to claim 4, **characterized by** the fact the cylinder absorbers 3 have chambers 80, 81 and 82 on the inside. Chambers 81 and 82 communicate through the inline valve 86. Chamber 80 is the working chamber that communicates with the hydraulic group through the flow regulator 67, whilst the valve 86 and the regulator 67 dampen the hydraulic fluid flow through them and the tank 69 in an ascending and descending passage of the rod 83 and the seal bobbin 85, caused by the continuous movements of the vehicle suspension systems.

11. IMPROVEMENTS IN MAKING CHANGES, TRANSFORMATIONS OR CONVERSIONS TO VEHICLES FOR ACCESS AND TRANSPORTATION OF DISABLED PERSONS AND/OR WHEELCHAIRS, according to claim 4, **characterized by** the fact the piston 84 is independent and moves when the working chamber 80 is filled with pressure fluid, touching the seal bobbin 85 and moving the rod 83 towards the inside of the chamber 81, reducing the distance between erection points 74 and 75, which in turn is directly proportional to that of the original vehicle suspension systems and their separation at ground level.
